Europäisches Patentamt

European Patent Office

Office européen des brevets

(19)

(11) Veröffentlichungsnummer : **0 348 817 B1**

(12) # EUROPÄISCHE PATENTSCHRIFT

(45) Veröffentlichungstag der Patentschrift :
**26.08.92 Patentblatt 92/35**

(51) Int. Cl.⁵ : **B60G 17/015**

(21) Anmeldenummer : **89111355.7**

(22) Anmeldetag : **22.06.89**

(54) **Regelungseinrichtung zur Wankstabilisierung eines Fahrzeuges.**

(30) Priorität : **27.06.88 DE 3821609**

(43) Veröffentlichungstag der Anmeldung :
**03.01.90 Patentblatt 90/01**

(45) Bekanntmachung des Hinweises auf die
Patenterteilung :
**26.08.92 Patentblatt 92/35**

(84) Benannte Vertragsstaaten :
**DE ES FR GB IT SE**

(56) Entgegenhaltungen :
**EP-A- 0 114 757**

(56) Entgegenhaltungen :
**EP-A- 0 236 947**
**EP-A- 0 249 246**
**DE-A- 2 844 413**
**PATENT ABSTRACTS OF JAPAN vol. 12, no.**
**52 (M-668)(2899) 17 Februar 1988, & JP-A-62**
**198511 (NISSAN) 02 September 1987,**

(73) Patentinhaber : **Bayerische Motoren Werke**
**Aktiengesellschaft**
**Patentabteilung AJ-30 Postfach 40 02 40**
**Petuelring 130**
**W-8000 München 40 (DE)**

(72) Erfinder : **Konik, Dieter, Dr.**
**Riederstrasse 4**
**W-8036 Herrsching am Ammersee (DE)**

**Beschreibung**

Die Erfindung betrifft eine Regelungseinrichtung zur Wankstabilisierung eines Fahrzeuges nach dem Oberbegriff des Patentanspruchs 1.

Bei einer aus der DE-A 28 44 413 bekannten Regelungseinrichtung zur Wankstabilisierung eines Fahrzeuges werden an der Vorderachse und an der Hinterachse des Fahrzeuges durch hydraulisch verstellbare Federbeine jeweils ein Stabilisatormoment erzeugt. Diese Stabilisatormomente an der Vorder- und Hinterachse des Fahrzeuges wirken der bei Kurvenfahrt des Fahrzeuges auftretenden Wankbewegung des Fahrzeugaufbaus entgegen. Die Verstellung der hydraulischen Federbeine wird mit Hilfe von elektrohydraulischen Ventilen vorgenommen, die den Zufluß bzw. Abfluß der Hydraulikflüssigkeit zu bzw. von den hydraulischen Federbeinen entsprechend ihrem jeweiligen Öffnungsgrad vorgeben. Die Steuereingänge der elektrohydraulischen Ventile sind mit dem Ausgang eines Reglers elektrisch verbunden, der die Steuersignale für die elektrohydraulischen Ventile in Abhängigkeit von der gemessenen Querbeschleunigung des Fahrzeuges erzeugt.

Ein Nachteil dieser bekannten Regelungseinrichtung ist, daß die hydraulisch verstellbaren Federbeine einer Fahrzeugseite an der Vorderachse und an der Hinterachse mit dem selben Hydraulikdruck beaufschlagt werden. Dadurch treten beim schnellen Einlenken des Fahrzeuges in eine Kurve dynamische Radlastschwankungen auf, die zu Schwankungen der Seitenführungskräfte an der Vorderachse und an der Hinterachse des Fahrzeuges führen. Diese wiederum führen zu Pendelbewegungen des Fahrzeuges um die Fahrzeughochachse und damit zu einem unsicheren Fahrverhalten des Fahrzeuges.

Ein Beitrag zu einem verbesserten Fahrverhalten des Fahrzeuges wird bei der aus der EP-A 236 947 bekannten, dem Oberbegriff des Anspruchs 1 entsprechenden Regelungseinrichtung zur Wankstabilisierung dadurch erzielt, daß an der Vorderachse und an der Hinterachse des Fahrzeuges unterschiedlich große Stabilisatormomente erzeugt werden. Diese Stabilisatormomente an der Vorder- und Hinterachse des Fahrzeuges werden bei dieser bekannten Regelungseinrichtung in Abhängigkeit von der Querbeschleunigung und der Gierwinkelgeschwindigkeit des Fahrzeuges durch hydraulisch verstellbare Federbeine erzeugt, die, enbenso wie bei der aus der DE-A 28 44 413 bekannten Regelungseinrichtung, zwischen den Radträgern oder Radführungselementen und dem Fahrzeugaufbau angeordnet sind.

Es ist Aufgabe der Erfindung, eine Regelungseinrichtung eingangs genannter Art anzugeben, durch die neben einer Minimierung des Wankwinkels des Fahrzeugaufbaus gleichzeitig ein optimales Fahrverhalten eines mit der erfindungsgemäßen Regelungseinrichtung ausgerüsteten Fahrzeuges erreicht wird.

Diese Aufgabe wird erfindunggemäß durch die kiennzeichnenden Merkmale des Patentanspruchs 1 gelöst.

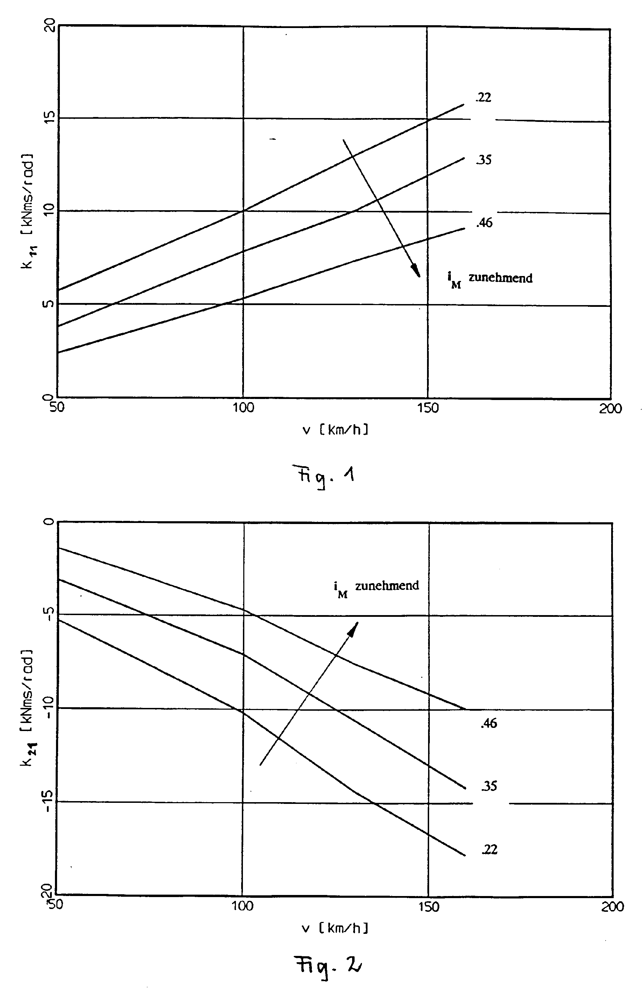

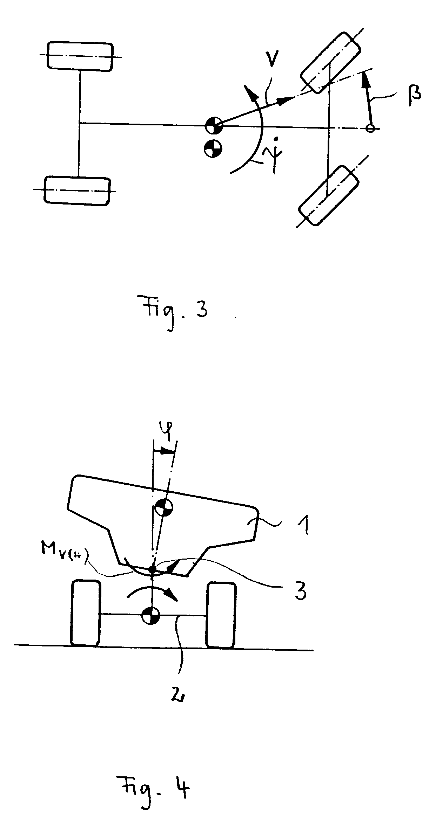

Die erfindungsgemäße Regelungseinrichtung benötigt für die Erzeugung der Stabilisatormomente als Eingangsgrößen die Fahrgeschwindigkeit sowie die Zustandsgrößen Gierwinkelgeschwindigkeit, Wankwinkel und Wankwinkelgeschwindigkeit. Diese Zustandsgrößen bestimmen entsprechend ihrer Gewichtung durch die Koeffizienten $k_{ij}$ mit $i = 1, 2$ und $j = 1, 2, 3$ das an der Vorderachse und an der Hinterachse jeweils wirkende Stabilsatormoment. Die Koeffizienten $k_{12}$, $k_{22}$, $k_{13}$ und $k_{23}$ der Wankbewegung sind konstant und damit unabhängig von der Fahrgeschwindigkeit und von der stationären Stabilisatormomentenverteilung $i_M$ zwischen Vorderachse und Hinterachse. Mit Hilfe dieser Koeffizienten lassen sich das dynamische Verhalten und der stationäre Wert des Wankwinkels vorgeben. Das dynamische Verhalten der Gierwinkelgeschwindigkeit, des Schwimmwinkels und der daraus abgeleiteten Größen, wie beispielsweise der Querbeschleunigung, läßt sich mit den Koeffizienten $k_{11}(V(t), i_M)$ und $k_{21}(V(t), i_M)$ vorgeben. Die für das jeweilige Fahrzeug optimalen Werte bzw. Kennlinienfelder der Koeffizienten können in einfacher Weise durch Simulationsstudien bestimmt werden. Die Kennlinienfelder der Koeffizienten $k_{11}$ und $k_{21}$ sind für einen bestimmten Fahrzeugtyp in den Fig. 1 und 2 exemplarisch dargestellt. Aus Fig. 1 ist zu erkennen, daß der Koeffizient $k_{11}$ bei konstanter stationärer Stabilisatormomentenverteilung $i_M = \dfrac{M_H}{M_V + M_H}$ mit zunehmender Fahrgeschwindigkeit $V$ nahezu linear ansteigt. Ferner ist der Fig. 1 zu entnehmen, daß die $k_{11}$-Kennlinien mit ansteigendem Wert der stationären Stabilisatormomentenverteilung $i_M$ in Richtung kleinerer $k_{11}$-Werte verschoben sind. Die Fig. 2 zeigt, daß der Koeffizient $k_{21}$ bei konstanter stationärer Stabilisatormomentenverteilung $i_M$ mit zunehmender Fahrgeschwindigkeit nahezu linear abfällt. Ferner kann der Fig. 2 entnommen werden, daß die $k_{21}$-Kennlinien mit zunehmender, stationärer Stabilisatormomentenverteilung $i_M$ in Richtung größerer $k_{21}$-Werte verschoben sind.

Durch eine vom jeweiligen Fahrzeugtyp abhängige Festlegung der einzelnen Koeffizienten, insbesondere der Koeffizienten $k_{11}$ und $k_{21}$ kann das Dämpfungsverhalten der wesentlichen querdynamischen Bewegungsgrößen wie Gierwinkelgeschwindigkeit, Schwimmwinkel, Wankwinkel und Querbeschleunigung beim "geregelten" Fahrzeug gegenüber einem Fahrzeug mit konventioneller Wankstabilisierung deutlich verbessert werden. Diese Verbesserung nimmt mit wachsender Querbeschleunigung zu. Das dynamische Verhalten des Fahrzeuges im niedrigen Querbeschleunigungsbereich - mit diesem ist der Fahrer in der Regel vertraut - bleibt auch im oberen Querbeschleunigungsbereich erhalten. Für den Fahrer ist das "geregelte" Fahrzeug daher leichter beherrschbar. Diese Verbsssserungen werden durch die Stabilisatormomente $M_V$ und $M_H$ dadurch bewirkt, daß sie die bei Kurvenfahrt auftretenden Änderungen der Radaufstandskraft derart zwischen Vorderund Hinterachse des Fahrzeuges verteilen, daß unabhängig vom Fahrzustand immer eine optimale Verteilung der Seitenführungskräfte zwischen Vorder- und Hinterachse gewährleistet ist. Mit der erfindungsgemäßen Regelungseinrichtung wird damit neben einer Minimierung des Wankwinkels bei Kurvenfahrt ein optimales Fahr- und Eigenlenkverhalten eines mit der erfindungsgemäßen Regelungseinrichtung ausgerüsteten Fahrzeuges erreicht.

Vorzugsweise wird die sich bei stationärer Kreisfahrt einstellende stationäre Stabilisatormomentenverteilen $i_M = \dfrac{M_H}{M_V + M_H}$ nicht konstant gewählt, sondern in Abhängigkeit von der Fahrzeuglängsbeschleunigung $\dot{V}$ (t) und von der Fahrzeugzuladung $\Delta m$ festgelegt. Dadurch wird erreicht, daß die Stabilisatormomente $M_V$ und $M_H$ unabhängig von der Beschleunigung und der Zuladung des Fahrzeuges immer so zwischen der Vorderachse und der Hinterachse verteilt werden, daß die erreichbare Querbeschleunigung maximiert wird und gleichzeitig ein sicherer Fahrzustand erhalten bleibt. So kann beispielsweise an der Vorderachse des Fahrzeuges beim Bremsen ein größeres Stabilisatormoment $M_V$ aufgebracht werden, als beim Beschleunigen des Fahrzeuges. Hierdurch neigt das Fahrzeug weniger zum Eindrehen in die Kurve. Ferner kann beispielsweise bei einem Fahrzeug mit großer Zuladung im Heckbereich an der Hinterachse des Fahrzeuges ein größeres Stabilisatormoment aufgebracht werden als bei einem unbeladenen Fahrzeug.

Simulationsuntersuchungen für verschiedene Fahrzeugtypen haben gezeigt, daß es vorteilhaft ist, wenn der Koeffizient $k_{12}$ größer als der Koeffizient $k_{13}$ und der Koeffizient $k_{22}$ größer als der Koeffizient $k_{23}$ gewählt wird.

Ferner hat es sich als vorteilhaft erwiesen, wenn das jeweilige Verhältnis der Koeffizienten $k_{12}$ zu $k_{22}$ und $k_{13}$ zu $k_{23}$ bei genormten Dimensionen im Bereich zwischen 0,2 und 0,8 liegt.

Bei einer Weiterbildung der Erfindung wird zur Erzeugung der Stabilisatormomente $M_V$ und $M_H$ an der Vorder- und Hinterachse anstelle des inertialen Wankwinkels $\varphi$ (t) und/oder der inertialen Wankwinkelgeschwindigkeit $\dot{\varphi}$ (t) der Aufbauwankwinkel $\varphi_A$ (t) des Fahrzeugaufbaus relativ zu den Radträgern oder Radführungselementen und/oder dessen zeitliche Ableitung $\dot{\varphi}_A$ (t) verwendet. Der Vorteil dieser Weiterbildung der Erfindung liegt in der einfacheren Meßbarkeit des Aufbauwankwinkels $\varphi_A$ (t) im Vergleich zum inertialen Wankwinkel $\varphi$ (t). Der Aufbauwankwinkel $\varphi_A$ (t) kann beispielsweise mit geringem Meßaufwand aus den Einfederwegen des Fahrzeugaufbaus relativ zu den Radträgern oder Radführungselementen bestimmt werden. Entsprechendes gilt für die Aufbauwankwinkelgeschwidigkeit $\dot{\varphi}_A$ (t).

Um die zu messenden Signale möglichst gering zu halten, wird nach einer Weiterbildung der Erfindung die Wankwinkelgeschwindigkeit $\dot{\varphi}$ (t) durch Zustandsfilterung bzw. bei Verwendung eines Digitalrechners durch numerische Differentiation des Wankwinkels $\varphi$ (t) gewonnen.

Demselben Ziel dient die Bestimmung der Fahrzeuglängsbeschleunigung $\dot{V}$ (t) durch Zustandsfilterung bzw. bei Verwendung eines Digitalrechners durch numerische Differentiation der Fahrgeschwindigkeit V (t).

Nach einer Weiterbildung der Erfindung werden die Stabilisatormomente $M_V$ und $M_H$ an der Vorder- und Hinterachse des Fahrzeuges zusätzlich zu den vorstehend genannten Eingangsgrößen auch in Abhängigkeit vom Schwimmwinkel $\beta$ (t) und/oder vom Lenkwinkel $\delta$ (t) erzeugt. Diese Weiterbildung der Erfindung zeichnet sich durch eine ausgezeichnete Regeldynamik aus.

Werden gemäß einer weiteren Fortbildung der Erfindung einzelne querdynamische Bewegungsgrößen, insbesondere der Wankwinkel, die Gier- oder Wankwinkelgeschwindigkeit mit Hilfe eines fahrzeugspezifischen Modells der Querdynamik (Simulator) in Abhängigkeit des Lenkwinkels

$\delta$ (t) ermittelt, dann müssen diese querdynamischen Bewegungsgrößen nicht mehr gemessen werden. Werden alle querdynamischen Bewegungsgrößen der Bildungsgesetze (I) und (II) der Stabilisatormomente an der Vorder- und Hinterachse mit Hilfe des fahrzeugspezifischen Modells der Querdynamik in Abhängigkeit des Lenkwinkels erzeugt, und setzt man diese Schätzwerte anstelle der realen Bewegungsgrößen in die Bildungsgesetze (I) und (II) für die Stabilisatormomente ein, so erhält man aus der Regelungseinrichtung eine Steuerungseinrichtung, mit der in Abhängigkeit vom Lenkwinkel, von der Fahrgeschwindigkeit und ggf. von der Fahrzeugzuladung die Stabilisatormomente an der Vorder- und Hinterachse erzeugt werden.

Ein derartiges fahrzeugspezifisches Modell der Querdynamik (Simulator) ist im Unteranspruch 11 durch seine mathematischen Gleichungen bestimmt. Dieses analoge fahrzeugspezifische Modell der Querdynamik kann bei Verwendung eines Digitalrechners anstelle einer Analogrechners selbstverständlich durch sein äquivalentes zeitdiskretes Modell ersetzt werden.

Die Bildungsgesetze (I) und (II) für die Erzeugung der Stabilisatormomente an der Vorder- und Hinterachse gelten ferner selbstverständlich sowohl für eine Realisierung eines zeitkontinuierlichen Reglers als auch für eine Realisierung eines zeitdiskreten Reglers auf einem Digitalrechner.

In den weiteren Figuren ist das wesentliche der Erfindung weiter erläutert. Es zeigen

Fig. 3 eine schematische Darstellung eines Fahrzeugunterbaus,

Fig. 4 eine schematische Darstellung eines Fahrzeuges in Rükansicht,

Fig. 5 eine Prinzipdarstellung der wesentlichen Komponenten einer Regelungseinrichtung nach der Erfindung,

Fig. 6 die Verläufe der Stabilisatormomente an der Vorder- und Hinterachse bei einem Lenkwinkelsprung,

Fig. 7 eine Darstellung des Wankwinkelverlaufs bei einem mit der erfindungsgemäßen Regelungseinrichtung ausgerüsteten Fahrzeug im Vergleich zu einem konventionellen Fahrzeug,

Fig. 8 eine Darstellung des Gierwinkelgeschwindigkeitsverlaufs bei einem mit der erfindungsgemäßen Regelungseinrichtung ausgerüsteten Fahrzeug im Vergleich zu einem konventionellen Fahrzeug und

Fig. 9 eine Darstellung des Schwimmwinkelverlaufs bei einem mit der erfindungsgemäßen Regelungseinrichtung ausgerüsteten Fahrzeug im Vergleich zu einem konventionellen Fahrzeug.

Anhand der Fig. 3 und 4 sollen die wesentlichen querdynamischen Bewegungsgrößen eines Fahrzeuges erläutert werden. In Fig. 3 ist mit dem Vektor V die Fahrgeschwindigkeit des Fahrzeuges in Bewegungsrichtung des Fahrzeugschwerpunktes dargestellt. Ferner ist mit $\dot{\psi}$ die Gierwinkelgeschwindigkeit bezeichnet. Bei dieser handelt es sich um die zeitliche Änderung des Gierwinkels $\psi$, der durch die Drehbewegung des Fahrzeuges um seine durch den Fahrzeugschwerpunkt verlaufende Hochachse bestimmt ist. Darüber hinaus ist in der Prinzipskizze von Fig. 3 der Schwimmwinkel $\beta$ eingezeichnet, der durch die Richtung der Fahrzeuglängsachse und durch die Bewegungsrichtung des Fahrzeugschwerpunktes bestimmt ist.

In der Prinzipskizze von Fig. 4 ist zusätzlich noch der Wankwinkel $\varphi$ des Fahrzeugaufbaus 1 um eine zwischen dem Fahrzeugaufbau 1 und den Radführungselementen 2 liegende und in Fahrzeuglängsrichtung verlaufende Rollachse 3 eingezeichnet. Schließlich ist in Fig. 4 noch die Wirkrichtung der Stabilisatormomente $M_V$ und $M_H$ an der Vorder- und Hinterachse dargestellt. Die Orientierung dieser querdynamischen Bewegungsgrößen sowie die Wirkrichtung der Stabilisatormomente an der Vorder- und Hinterachse sind der Beschreibung und Kennzeichnung der Erfindung auch in den Patentansprüchen zugrundegelegt.

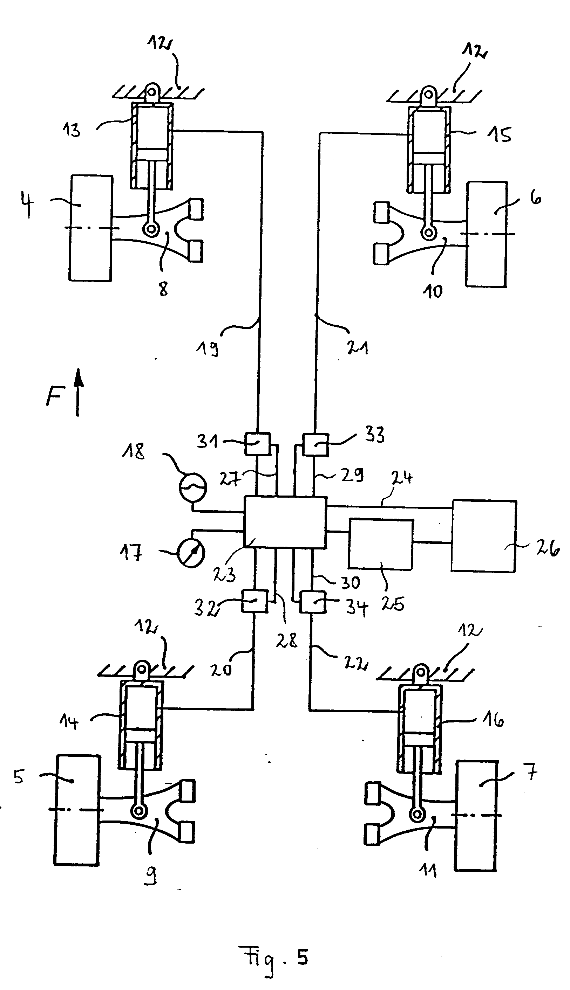

Die in Fig. 5 in Form einer Prinzipskizze dargestellte Regelungseinrichtung dient zur Wankstabilisierung und gleichzeitig zur Verbesserung des Fahrverhaltens eines vorwärts in Richtung des Pfeiles F fahrenden Fahrzeuges. Die Regelungseinrichtung weist an jedem Fahrzeugrad 4, 5, 6 oder 7 zwischen dem jeweiligen Radträger oder Radführungselement 8, 9, 10 oder 11 und dem Fahrzeugaufbau 12 jeweils ein Stellglied 13, 14, 15 oder 16 auf. Während die Stellglieder 13 und 15 an der Vorderachse des Fahrzeuges ein der Wankbewegung des Fahrzeugaufbaus 12 entgegenwirkendes Stabilisatormoment aufbauen, erzeugen die Stellglieder 14 und 16 ein entsprechendes Stabilisatormoment an der Hinterachse des Fahrzeuges. Beim dargestellten Ausführungsbeispiel sind die Stellglieder 13, 14, 15 und 16 als hydraulische Zylinder-Kolben-Einheiten ausgeführt, die von einem Druckerzeuger 17 mit hydraulischem Druck beaufschlagbar sind. Zum etwaigen Abbau von hydraulischem Druck sind die Zylinder-Kolben-Einheiten 13, 14, 15 und 16 an einen Druckspeicher 18 angeschlossen.

Um eine einfache Darstellung zu erhalten, ist nur jeweils eine der Hydraulikleitungen 19, 20, 21 und 22 zur Verbindung der Zylinder-Kolben-Einheiten 13, 14, 15 und 16 mit dem Druckerzeuger 17 und dem Druckspeicher 18 dargestellt.

Das Kernstück der in Fig. 5 dargestellten Regelungseinrichtung ist die zentrale Reglereinheit 23. Diese zentrale Reglereinheit 23 ist einerseits über elektrische Leitungen 24 direkt und andererseits unter Zwischenschaltung eines Simulators 25 mit einer Meßeinrichtung 26 verbunden. Sie erzeugt in Abhängigkeit von den durch die Meßeinrichtung 26 gemessenen bzw. mit Hilfe des Simulators aufgrund des gemessenen Lenkwinkels geschätzten Zustandsgrößen, wie beispielsweise Gierwinkelgeschwindigkeit, Wankwinkel oder Wankwinkelgeschwindigkeit Steuersignale. Diese werden über Steuerleitungen 27, 28, 29 und 30 an die Steuereingänge von in den Hydraulikleitungen 19, 20, 21 und 22 angeordneten Steuerventilen 31, 32, 33 und 34 ausgegeben. Durch diese Steuerventile 31, 32, 33 und 34 wird der Druckaufbau bzw. Druckabbau in den Zylinder-Kolben-Einheiten 13, 14, 15 und 16 gesteuert.

In der Reglereinheit 23 werden die an die Steuerventile 31, 32, 33 und 34 abgegebenen Steuersignale in Abhängigkeit von der Gierwinkelgeschwindigkeit $\dot{\psi}$, dem Wankwinkel $\varphi$, der Wankwinkelgeschwindigkeit $\dot{\varphi}$, der Fahrzeuglängsbeschleunigung $\dot{V}$ und der Zuladung $\Delta m$ bestimmt. Die Bestimmung der Steuersignale erfolgt dabei derart, daß die Stabilisatormomente $M_V$ und $M_H$ an der Vorder- und Hinterachse gemäß den Bildungsgesetzen

$$M_V(t) \; = \; k_{11}[V(t), i_M(\dot{V}(t), \Delta m)] \cdot \dot{\psi}(t) \; + \; k_{12} \cdot \varphi(t) \; + \; k_{13} \cdot \dot{\varphi}(t) \quad (I)$$
$$M_H(t) \; = \; k_{21}[V(t), i_M(\dot{V}(t), \Delta m)] \cdot \dot{\psi}(t) \; + \; k_{22} \cdot \varphi(t) \; + \; k_{23} \cdot \dot{\varphi}(t) \quad (II)$$

erzeugt werden. Bei diesen Bildungsgesetzen hängen die Koeffizienten $k_{11}$ und $k_{21}$ von der Fahrgeschwindig-

keit V und von der Stabilisatormomentenverteilung $i_M = \dfrac{M_H}{M_V + M_H}$ bei stationärer Kreisfahrt ab. Diese Abhängigkeiten der Koeffizienten $k_{11}$ und $k_{21}$ sind für einen bestimmten Fahrzeugtyp in den Fig. 1 und 2 dargestellt. Die übrigen Koeffizienten $k_{12}$, $k_{22}$, $k_{13}$ sowie $k_{23}$ sind konstant und größer Null. Ihre Werte hängen lediglich vom jeweiligen Fahrzeugtyp ab und können durch Sumulationsstudien bestimmt werden.

Um neben der Wankstabilisierung auch ein optimales Fahrverhalten des Fahrzeuges zu erreichen, wird die stationäre Stabilisatormomentenverteilung $i_M$ nicht als konstanter Wert festgesetzt, sondern in Abhängigkeit von der Fahrzeuglängsbeschleunigung $\dot{V}$ und der Fahrzeugzuladung $\Delta m$ bestimmt. Um die Anzahl der zu messenden Größen zu verringern, werden vorzugsweise die Wankwinkelgeschwindigkeit $\dot{\varphi}$ sowie die Fahrzeuglängsbeschleunigung $\dot{V}$ durch Zustandsfilterung bzw. bei Verwendung eines Digitalrechners durch numerische Differentiation des Wankwinkels $\varphi$ bzw. der Fahrgeschwindigkeit V gewonnen.

Mit Hilfe des Simulators 25 können in Abhängigkeit vom Lenkwinkel $\delta$ Schätzwerte für den Verlauf des Schwimmund Wankwinkels sowie der Gier- und Wankwinkelgeschwindigkeit erzeugt werden. Werden diese Schätzwerte anstelle der entsprechenden realen querdynamischen Bewegungsgrößen in der Reglereinheit 23 weiter verarbeitet, so übernimmt die Reglereinheit 23 die Funktion einer Steuerung der Stabilisatormomente $M_V$ und $M_H$ an der Vorder- und Hinterachse des Fahrzeuges. Der Vorteil einer solchen Steuerung liegt insbesondere in der geringen Anzahl der zu messenden Größen. Neben dem Lenkwinkel $\delta$ werden lediglich noch die Fahrzeugzuladung $\Delta m$, die Fahrgeschwindigkeit V sowie deren zeitliche Ableitung $\dot{V}$ benötigt. Sowohl die Reglereinheit 23 als auch der Simulator 25 können durch einen Analogrechner als auch durch einen zeitdiskret arbeitenden Digitalrechner realisiert sein.

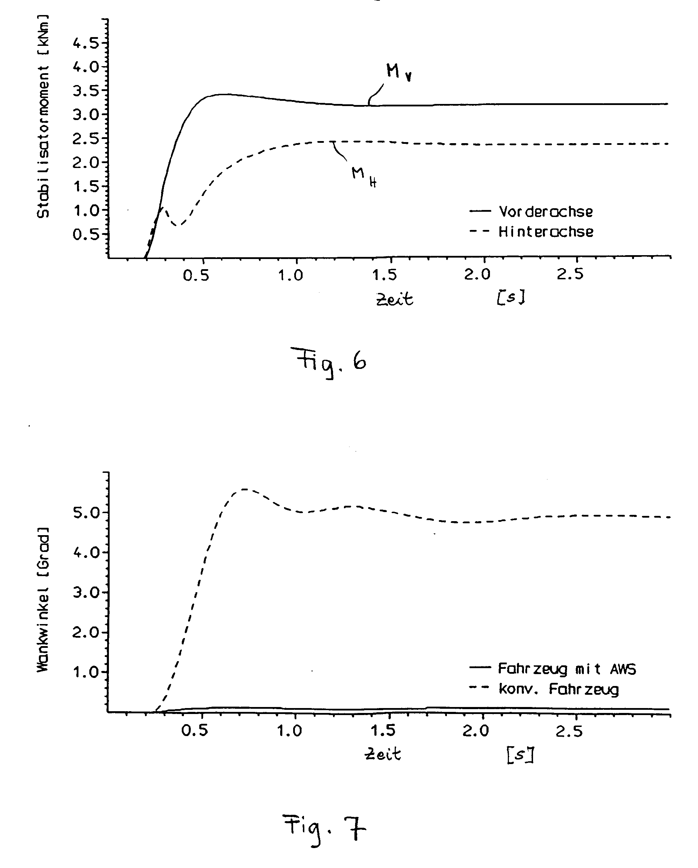

In Fig. 6 sind die Verläufe der von der Regelungseinrichtung von Fig. 5 erzeugten Stabilisatormomente $M_V$ und $M_H$ an der Vorder- und Hinterachse bei einem Lenkwinkelsprung dargestellt. Es ist zu erkennen, daß die Stabilisatormomente $M_V$ und $M_H$ nahezu schwingungsfrei von ihrem gemeinsamen Ausgangswert (0 kNm) zu ihren stationären Endwerten ansteigen. Es ist ferner zu erkennen, daß zu Beginn des Lenkwinkelsprungs zunächst an der Hinterachse ein größeres Stabilisatormoment aufgebracht wird als an der Vorderachse.

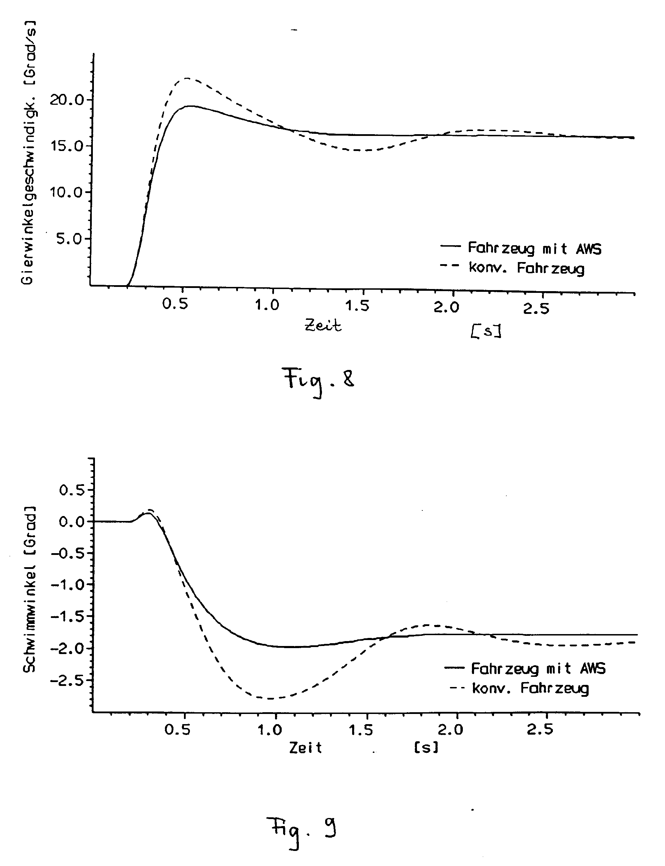

In den Fig. 7 bis 9 sind die sich bei einem Lenkwinkelsprung einstellenden Verläufe der wichtigsten querdynamischen Bewegungsgrößen eines mit der erfindungsgemäßen Regelungseinrichtung ausgerüsteten Fahrzeuges im Vergleich zu einem konventionellen Fahrzeug dargestellt.

So ist in Fig. 7 zu erkennen, daß der Wankwinkel $\varphi$ bei einem mit der erfindungsgemäßen Regelungseinrichtung ausgerüsteten Fahrzeug verschwindend klein ist, während er bei einem konventionellen Fahrzeug bei dem vorausgesetzten Lenkwinkelsprung etwa 5° beträgt.

In Fig. 8 sind die Verläufe der Gierwinkelgeschwindigkeit bei einem mit der erfindungsgemäßen Regelungseinrichtung ausgerüsteten Fahrzeug und bei einem konventionellen Fahrzeug gegenübergestellt. Während beim konventionellen Fahrzeug die Gierwinkelgeschwindigkeit erst nach etwa 2 sek. auf ihren stationären Wert einschwingt, ist die Gierwinkelgeschwindigkeit bei einem mit der erfindungsgemäßen Regelungseinrichtung ausgerüsteten Fahrzeug so stark gedämpft, daß nahezu kein Überschwingen zu erkennen ist.

In Fig. 9 ist der Unterschied zwischen einem mit der erfindungsgemäßen Regelungseinrichtung ausgerüsteten Fahrzeug und einem konventionellen Fahrzeug noch deutlicher sichtbar. Während sich der Schwimmwinkel eines mit der erfindungsgemäßen Regelungseinrichtung ausgerüsteten Fahrzeuges ohne Schwingneigung auf den neuen stationären Wert einstellt, ist beim konventionellen Fahrzeug ein ausgeprägtes Überschwingen des Schwimmwinkels zu erkennen.

Wie insbesondere aus den Fig. 8 und 9 zu erkennen ist, ist das Fahrverhalten eines mit der erfindungsgemäßen Regelungseinrichtung ausgerüsteten Fahrzeuges gegenüber einem konventionellen Fahrzeug deutlich verbessert, da sowohl die Gierwinkelgeschwindigkeit als auch der Schwimmwinkel nahezu keinen Schwingungen unterliegen, die auf unerwünschte Pendelbewegungen des Fahrzeuges um die Fahrzeughochachse zurückzuführen wären.


**Patentansprüche**

1. Regelungseinrichtung zur Wankstabilisierung eines Fahrzeuges, mit zwischen den Radträgern oder Radführungselementen (8, 9, 10, 11) und dem Fahrzeugaufbau (12) angeordneten Stellgliedern (13, 14, 15, 16), die in Abhängigkeit von zumindest zwei querdynamischen Bewegungsgrößen, wovon eine die Gierwinkelgeschwindigkeit $\dot{\psi}$ (t) ist, ein Stabilisatormoment $M_V$ an der Vorderachse und ein Stabilisatormoment $M_H$ an der Hinterachse erzeugen,
**dadurch gekennzeichnet**,
daß die Stabilisatormomente $M_V$ und $M_H$ an der Vorder- und Hinterachse in Abhängigkeit von den gemessenen bzw. ermittelten Größen der Giervinkelgeschwindigkeit $\dot{\psi}$ (t), des Wankwinkels $\varphi$ (t) und der Wankwinkelgeschwindigkeit $\dot{\varphi}$ (t) gemäß den Bildungsgesetzen

$$M_V(t) = k_{11}(V(t),i_M)\cdot\dot{\psi}(t) + k_{12}\cdot\varphi(t) + k_{13}\cdot\dot{\varphi}(t) \quad [\text{I}]$$
$$M_H(t) = k_{21}(V(t),i_M)\cdot\dot{\psi}(t) + k_{22}\cdot\varphi(t) + k_{23}\cdot\dot{\varphi}(t) \quad [\text{II}]$$

erzeugt werden, wobei $k_{11}$ und $k_{21}$ von der Fahrgeschwindigkeit V (t) und von der Stabilisatormomentenverteilung $i_M = \dfrac{M_H}{M_V + M_H}$ bei stationärer Kreisfahrt abhängige Koeffizienten und $k_{12}$, $k_{22}$, $k_{13}$ sowie $k_{23}$ fahrzeugspezifische konstante Koeffizienten größer Null darstellen.

2. Regelungseinrichtung nach Anspruch 1, dadurch gekennzeichnet, daß die stationäre Stabilisatormomentverteilung $i_M = \dfrac{M_H}{M_V + M_H}$ von der Fahrzeuglängsbeschleunigung $\dot{V}$ (t) und von der Fahrzeugzuladung $\Delta m$ abhängt.

3. Regelungseinrichtung nach Anspruch 1 oder 2, dadurch gekennzeichnet, daß der Koeffizient $K_{12}$ größer als der Koeffizient $k_{13}$ und der Koeffizient $k_{22}$ größer als der Koeffizient $k_{23}$ ist.

4. Regelungseinrichtung nach einem der vorhergehenden Ansprüche, dadurch gekennzeichnet, daß das jeweilige Verhältnis der Koeffizienten $k_{12}$ zu $k_{22}$ und $k_{13}$ zu $k_{23}$ bei genormten Dimensionen im Bereich zwischen 0,2 und 0,8 liegt.

5. Regelungseinrichtung nach einem der vorhergehenden Ansprüche, dadurch gekennzeichnet, daß zur Erzeugung der Stabilisatormomente $M_V$ und $M_H$ an der Vorder- und Hinterachse anstelle des inertialen Wankwinkels $\varphi$ (t) und/oder der Wankwinkelgeschwindigkeit $\dot{\varphi}$ (t) der Aufbauwankwinkel $\varphi_A$ (t) des Fahrzeugaufbaus (1) relativ zu den Radträgern oder Radführungselementen (8, 9, 10, 11) und /oder dessen zeitliche Ableitung $\dot{\varphi}_A$ (t) verwendet wird.

6. Regelungseinrichtung nach einem der vorhergehenden Ansprüche, dadurch gekennzeichnet, daß die Wankwinkelgeschwindigkeit $\dot{\varphi}$ (t) durch Zustandsfilterung bzw. bei Verwendung eines Digitalrechners durch numerische Differentiation des Wankwinkels $\varphi$ (t) gewonnen wird.

7. Regelungseinrichtung nach einem der Ansprüche 2 bis 6, dadurch gekennzeichnet, daß die Fahrzeuglängsbeschleunigung $\dot{V}$ (t) durch Zustandsfilterung bzw. bei Verwendung eines Digitalrechners durch numerische Differentiation der Fahrgeschwindigkeit V (t) gewonnen wird.

8. Regelungseinrichtung nach einem der vorhergehenden Ansprüche, dadurch gekennzeichnet, daß die Stabilisatormomente $M_V$ und $M_H$ an der Vorder- und Hinterachse auch in Abhängigkeit vom Schwimmwinkel $\beta$ (t) erzeugt werden.

9. Regelungseinrichtung nach einem der vorhergehenden Ansprüche, dadurch gekennzeichnet, daß die Stabilisatormomente $M_V$ und $M_H$ an der Vorder- und Hinterachse auch in Abhängigkeit vom Lenkwinkel $\delta$ (t) erzeugt werden.

10. Regelungseinrichtung nach einem der vorhergehenden Ansprüche, dadurch gekennzeichnet, daß mindestens eine querdynamische Bewegungsgröße, insbesondere der Wankwinkel, die Gier- oder Wankwinkelgeschwindigkeit mit Hilfe eines fahrzeugspezifischen Modells der Querdynamik in Abhängigkeit des Lenkwinkels $\delta$ (t) ermittelt wird.

11. Regelungseinrichtung nach Anspruch 10, dadurch gekennzeichnet, daß das fahrzeugspezifische Modell durch die mathematischen Gleichungen

$$\dot{\beta}(t) = a_{11}(v)\cdot\beta(t) + a_{12}(v)\cdot\dot{\psi}(t) + a_{13}(v)\cdot\psi(t) + a_{14}(v)\cdot\dot{\psi}(t) + b_1(v)\cdot\delta(t)$$

$$\ddot{\psi}(t) = a_{21}\cdot\beta(t) + a_{22}(v)\cdot\dot{\psi}(t) + a_{23}\cdot\psi(t) + a_{24}\cdot\dot{\psi}(t) + b_2\cdot\delta(t)$$

$$\ddot{\psi}(t) = a_{31}\cdot\beta(t) + a_{32}(v)\cdot\dot{\psi}(t) + a_{33}\cdot\psi(t) + a_{34}\cdot\dot{\psi}(t) + b_3\cdot\delta(t)$$

beschrieben ist, wobei die Koeffizienten $a_{1j}$, j=1..4, $b_1$, und $a_{i2}$, i=1,..,3 von der Fahrgeschwindigkeit V (t) abhängen und alle übrigen Koeffizienten konstant sind.

## Claims

1. A control system for preventing a vehicle from swinging and comprising actuators (13, 14, 15, 16) disposed between the wheel carriers or wheel guide elements (8, 9, 10, 11) and the vehicle body (12) so as to generate a stabilising torque $M_V$ at the front axle and a stabilising torque $M_H$ at the rear axle in dependence on at least two transverse dynamic kinetic quantities, one being the yawing-angle speed $\dot{\psi}$ (t), characterised in that the stabilising torques $M_V$ and $M_H$ at the front and rear axle are generated in dependence on the measured or calculated values of the yawing-angle speed $\dot{\psi}$(t), the swinging angle $\varphi$(t) and the swinging-angle speed $\dot{\varphi}$(t) as per the equations

$$M_V(t) = k_{11}(V(t),i_M) \cdot \dot{\psi}(t) + k_{12} \cdot \varphi(t) + k_{13} \cdot \dot{\varphi}(t) \quad [I]$$
$$M_H(t) = k_{21}(V(t),i_M) \cdot \dot{\psi}(t) + k_{22} \cdot \varphi(t) + k_{23} \cdot \dot{\varphi}(t) \quad [II]$$

where $k_{11}$ and $k_{21}$ are coefficients depending on the speed of travel V(t) and the stabilising torque distribution $i_m = M_H/(M_V+M_H)$ during steady travel in a circle, and $k_{12}$, $k_{22}$, $k_{13}$ and $k_{23}$ are constant coefficients greater than zero and specific to the vehicle.

2. A control system according to claim 1, characterised in that the steady stabilising torque distribution $i_m = M_H/(M_V+M_H)$ depends on the longitudinal acceleration $\dot{V}$(t) of the vehicle and the vehicle load $\Delta m$.

3. A control system according to claim 1 or 2, characterised in that the coefficient $K_{12}$ is greater than the coefficient k13 and the coefficient $k_{22}$ is greater than the coefficient $k_{23}$.

4. A control system according to any of the preceding claims, characterised in that the respective ratios of the coefficient $k_{12}$ to $k_{22}$ and $k_{13}$ to $k_{23}$, in the case of standard dimensions, is in the range from 0.2 to 0.8.

5. A control system according to any of the preceding claims, characterised in that the swinging angle $\varphi_A$(t) of the vehicle body (1) relative to the wheel carriers or wheel guide components (8, 9, 10, 11) and/or the time derivative $\dot{\psi}_A$(t) thereof is used instead of the inertial swinging angle $\varphi$(t) and or the swinging-angle speed $\dot{\varphi}$(t) in order to generate the stabilising torques $M_V$ and $M_H$ on the front and rear axle.

6. A control system according to any of the preceding claims, characterised in that the swinging-angle speed $\dot{\varphi}$(t) is obtained by filtering of state or by numerical differentiation of the swinging angle $\varphi$(t), using a digital computer.

7. A control system according to any of claims 2 to 6, characterised in that the longitudinal acceleration $\dot{V}$(t) of the vehicle is obtained by filtering of state or by numerical differentiation of the speed of travel V(t), using a digital computer.

8. A control system according to any of the preceding claims, characterised in that the stabilising torques $M_V$ and $M_H$ on the front and rear axle are also generated in dependence on the buoyancy angle $\beta$(t).

9. A control system according to any of the preceding claims, characterised in that the stabilising torques $M_V$ and $M_H$ on the front and rear axle are also generated in dependence on the steering angle $\delta$(t).

10. A control system according to any of the preceding claims, characterised in that at least one transverse dynamic kinetic quantity, more particularly the swinging angle or the yawing-angle or swinging-angle speed, is calculated in dependence on the steering angle $\delta$(t), using a transverse-dynamic model specific to the vehicle.

11. A control system according to claim 10, characterised in that the model specific to the vehicle is described by the mathematical equations:

$$\dot{\beta}(t) = \alpha_{11}(V) \cdot \beta(t) + \alpha_{12}(V)\dot{\psi}(t) + \alpha_{13}(V) \cdot \varphi(t) + \alpha_{14}(V)\dot{\varphi}(t) + b_1(V) \cdot \delta(t)$$
$$\dot{\psi}(t) = \alpha_{21} \cdot \beta(t) + \alpha_{22}(V)\dot{\psi}(t) + \alpha_{23} \cdot \varphi(t) + \alpha_{24} \cdot \dot{\varphi}(t) + b2 \cdot \delta(t)$$
$$\dot{\varphi}(t) = \alpha_{31} \cdot \beta(t) + \alpha_{32}(V)\dot{\psi}(t) + \alpha_{33} \cdot \varphi(t) + \alpha_{34} \cdot \dot{\varphi}(t) + b3 \cdot \delta(t),$$

the coefficients $a_{1j}$, j = 1..4, $b_1$, and $a_{i2}$, i = 1,..,3 depending on the speed of travel V(t) and all the other coefficients being constant.

**Revendications**

1°) Dispositif de contrôle anti-roulis d'un véhicule, avec disposés entre les supports de roue ou les éléments de guidage des roues (8, 9, 10, 11) et le châssis du véhicule (12) des organes de réglage (13, 14, 15, 16) qui produisent en fonction d'au moins deux grandeurs dynamiques transversales de mouvement, dont l'une est la vitesse angulaire d'embardée $\varphi(t)$, un couple de stabilisation $M_V$ sur l'essieu avant et un couple de stabilisation $M_H$ sur l'essieu arrière, dispositif de contrôle caractérisé en ce que les couples de stabilisation $M_V$ et $M_H$ sont produits sur l'essieu avant et arrière en fonction des grandeurs mesurées ou déterminées de la vitesse angulaire d'embardée $\varphi(t)$ de l'angle de roulis $\varphi(t)$ et de la vitesse angulaire de roulis $\varphi(t)$ selon les formules :

$$M_V(t) = k_{11}[V(t), i_M(\dot{V}(t), \Delta m)] \cdot \dot{\psi}(t) + k_{12} \cdot \varphi(t) + k_{13} \cdot \dot{\varphi}(t) \quad (I)$$
$$M_H(t) = K_{21}[V(t), i_M(\dot{V}(t), \Delta m)] \cdot \dot{\psi}(t) + k_{22} \cdot \varphi(t) + k_{23} \cdot \dot{\varphi}(t) \quad (II)$$

dans lesquelles $k_{11}$ et $k_{21}$ représentent des coefficients fonction de la vitesse du véhicule $V(t)$ et de la répartition des couples de stabilisation $i_M = \dfrac{M_H}{M_V + M_H}$ en virage stationnaire et $k_{12}$, $k_{22}$, $k_{13}$ ainsi que $k_{23}$ sont des coefficients constants spécifiques du véhicule plus grand que zéro.

2°) Dispositif de contrôle selon la revendication 1, caractérisé en ce que la répartition des couples de stabilisation stationnaire $i_M = \dfrac{M_H}{M_V + M_H}$ est fonction de l'accélération longitudinale du véhicule $\dot{V}(t)$ et de la charge du véhicule $\Delta m$.

3°) Dispositif de contrôle selon la revendication 1 ou 2, caractérisé en ce que le coefficient $k_{12}$ est plus grand que le coefficient $k_{13}$ et le coefficient $k_{22}$ est plus grand que le coefficient $k_{23}$.

4°) Dispositif de contrôle selon l'une des revendications précédentes, caractérisé en ce que les rapports respectifs des coefficients $k_{12}$ à $k_{22}$ et $k_{13}$ à $k_{23}$ se trouvent dans le cas des dimensions standard dans la zone entre 0,2 et 0,8.

5°) Dispositif de contrôle selon l'une des revendications précédentes, caractérisé en ce que pour produire les couples de stabilisation $M_V$ et $M_H$ sur les essieux avant et arrière sont utilisés à la place de l'angle de roulis inertiel $\varphi(t)$ et/ou de la vitesse angulaire de roulis $\varphi(t)$ l'angle de roulis du châssis $\varphi_A(t)$ du châssis du véhicule (1) par rapport aux supports de roue ou éléments de guidage des roues (8, 9, 10, 11) et/ou de sa dérivée dans le temps $\varphi_A(t)$.

6°) Dispositif de contrôle selon l'une des revendications précédentes, caractérisé en ce que la vitesse angulaire de roulis $\varphi(t)$ est obtenue par filtrage d'état ou par l'utilisation d'un calculateur numérique par différentiation numérique de l'angle de roulis $\varphi(t)$.

7°) Dispositif de contrôle selon l'une des revendications 2 à 6, caractérisé en ce que l'accélération longitudinale du véhicule $\dot{V}(t)$ est obtenue par filtrage d'état ou dans le cas de l'utilisation d'un calculateur numérique par différentiation numérique de la vitesse du véhicule $V(t)$.

8°) Dispositif de contrôle selon l'une des revendications précédentes, caractérisé en ce que les couples de stabilisation $M_V$ et $M_H$ sont produits sur l'essieu avant et l'essieu arrière en fonction de l'angle de flottement $\beta(t)$.

9°) Dispositif de contrôle selon l'une des revendications précédentes, caractérisé en ce que les couples de stabilisation $M_V$ et $M_H$ sur l'essieu avant et sur l'essieu arrière sont produits aussi en fonction de l'angle de braquage $\delta(t)$.

10°) Dispositif de contrôle selon l'une des revendications précédentes, caractérisé en ce qu'au moins une grandeur dynamique transversale de mouvement, en particulier l'angle de roulis, la vitesse angulaire d'embardée ou de roulis est déterminée à l'aide d'un modèle spécifique de véhicule de dynamique transversal en fonction de l'angle de braquage $\delta(t)$.

11°) Dispositif de contrôle selon la revendication 10, caractérisé en ce que le modèle spécifique du véhicule est décrit par les formules mathématiques :

$$\dot{\beta}(t) = m_{11}(V) \cdot \beta(t) + m_{12}(V)\psi(t) + m_{13}(V) \cdot \varphi(t) + m_{14}(V) \cdot \varphi(t) + b_1(V) \cdot \delta(t)$$
$$\dot{\psi}(t) = m_{21} \cdot \beta(t) + m_{22}(V)\psi(t) + m_{22} \cdot \varphi(t) + m_{24} \cdot \varphi(t) + b_2 \cdot \delta(t)$$
$$\dot{\varphi}(t) = m_{29} \cdot \delta(t) + m_{32}(V)\psi(t) + m_{33} \cdot \varphi(t) + m_{34} \cdot \varphi(t) + b_3 \cdot \delta(t)$$

dans lesquelles les coefficients $a_{1j}$, j étant égal à 1 ... 4, $b_1$ et $a_{i2}$, i étant égal à 1 ... 3, sont fonctions de la vitesse du véhicule $V(t)$ et tous les autres coefficients sont constants.

Fig. 1

Fig. 2

9

Fig. 3

Fig. 4

Fig. 5

Fig. 6

Fig. 7

Fig. 8

Fig. 9